# FASCICULE DE BREVET EUROPEEN

(11) **EP 2 886 906 B1**
(45) Date de publication et mention de la délivrance du brevet: **06.02.2019**
(21) Numéro de dépôt: 14196110.2
(22) Date de dépôt: 03.12.2014
(51) Int. Cl.: F16F 7/04, B60N 2/427, B60N 2/42

(54) **Absorbeur d'énergie pour siège anticrash et siège anticrash comportant un tel absorbeur d'énergie**
Energieaufnehmer für einen Anti-Absturz-Sitz und Anti-Absturz-Sitz mit einem solchen Energieaufnehmer.
Energy absorber for anti-crash seat and an anti-crash seat with such an absorber.

(30) Priorité: 03.12.2013 FR 1362027
(43) Date de publication de la demande: 24.06.2015
(73) Titulaire: Stelia Aerospace, 17300 Rochefort (FR)
(72) Inventeur: Cecinas, Laurent, 17870 Breuil Magne (FR); Taraud, Nicolas, 85350 Ile d'Yeu (FR)
(74) Mandataire: Argyma

(56) Documents cités:
- EP-A1- 0 075 067
- EP-A1- 0 716 980
- EP-A1- 2 360 095
- DE-C- 384 073
- DE-C- 434 164
- US-A- 3 985 388

## Description

L'invention appartient au domaine des sièges pour véhicule de transport. Elle concerne plus particulièrement un dispositif pour absorber l'énergie d'un siège en cas de forte accélération et un siège comportant un tel dispositif destiné à être installé dans un véhicule pouvant subir de fortes accélérations.

L'invention trouve en particulier application à bord des aéronefs pour absorber l'énergie en cas d'accélération liée au crash.

Dans le domaine du transport des personnes, en particulier dans le transport aérien, les accélérations provoquées par un crash peuvent atteindre des niveaux difficilement tolérables pour une personne. Il est connu de limiter la valeur de l'accélération maximale subie par une personne à bord d'un aéronef en absorbant une partie de l'énergie appliquée au siège sur lequel se trouve cette personne.

Un absorbeur d'énergie pour écrêter une force d'accélération subie par un corps pesant comportant un tambour enrouleur monté en rotation autour d'un arbre est connu, par exemple du document DE 434 164 C.

Suivant une méthode connue, par exemple du document US 4440441, pour absorber l'énergie en cas de crash, il est utilisé la déformation des structures du siège.

Dans ce cas il est nécessaire de concevoir la structure du siège pour que celle-ci se déforme de manière adaptée et que la structure reste suffisamment résistante pour maintenir le passager. Les règles de conception sont dans ce cas très contraignantes.

Suivant une autre méthode connue, par exemple du document US 3985388, l'assise du siège est fixée, avec une possibilité de déplacement suivant une direction supposée de l'accélération en cas de crash, à une structure rigide en mettant en oeuvre des éléments absorbant l'énergie lors d'un déplacement de l'assise par des déformations plastiques d'éléments de liaison de l'assise à la structure rigide ou des amortisseurs fonctionnant après la rupture d'un élément fusible.

Ces diverses solutions connues pour limiter les accélérations subies en cas de crash présentent l'inconvénient de conduire à des déformations irréversibles et en conséquence les moyens qui absorbent l'énergie ne peuvent pas être testés unitairement puis remis en état de fonctionnement.

En outre, l'énergie à absorber en cas d'accélération est fonction de la masse du siège avec son occupant. Pour prendre en compte que tous les occupants possibles d'un siège n'ont pas nécessairement le même poids, les dispositifs d'absorption d'énergie sont le plus souvent un compromis entre la masse du passager le plus léger envisagé et celle du plus lourd, ce qui pose des problèmes à la fois sur la valeur maximale de l'accélération subie, plus forte pour l'occupant léger, et sur l'amplitude du mouvement pendant lequel l'accélération est subie, plus grande pour un occupant lourd. Une telle solution ne convient donc que partiellement et imparfaitement dans les cas extrêmes.

Des solutions pour adapter l'absorbeur d'énergie au poids de l'occupant du siège, comme par exemple la solution décrite dans le document US7921973, sont généralement complexes et donc plus coûteuses et moins fiables.

La présente invention a pour objet de remédier à ces inconvénients au moyen un absorbeur d'énergie permettant, pendant une durée de fonctionnement sur une amplitude de déplacement déterminée, de limiter l'accélération à laquelle une masse pesante, telle que le passager d'un siège, est soumise lors d'une forte accélération.

L'absorbeur d'énergie pour écrêter une force d'accélération subie par un corps pesant comporte un tambour enrouleur monté en rotation autour d'un arbre autour duquel est enroulée, dans une configuration non déclenchée de l'absorbeur d'énergie, une ligne de traction. L'arbre est couplé mécaniquement à un rotor d'un frein à disques dont un stator est immobilisé en rotation par rapport à un boîtier et un élément ressort est monté en compression entre deux sous-ensembles du frein, chaque sous-ensemble comportant des éléments de rotor et de stator montés alternés et mobiles suivant une direction d'un axe de rotation du rotor, de sorte à exercer une force d'appui qui s'applique entre les éléments de rotor et les éléments de stator en contact, afin d'immobiliser en rotation l'arbre lorsqu'un couple appliqué à l'arbre par la ligne de traction soumise à une force de traction est inférieur à un couple frein maximum du frein et qui lorsque l'arbre est en rotation, dans une configuration déclenchée de l'absorbeur d'énergie, génère un couple sensiblement constant et égal au couple frein maximum.

Il est ainsi obtenu une ligne de traction qui est bloquée lorsque la traction exercée sur la ligne de traction est inférieure à celle produisant sur l'arbre le couple frein maximum du frein et qui est soumise à une force de traction constante lorsque la ligne de traction se déroule du tambour enrouleur.

L'absorbeur d'énergie comporte avantageusement un organe de contrôle agissant sur le frein pour modifier la valeur du couple frein maximum. Il est ainsi possible de modifier la force de traction appliquée par la ligne de traction lorsque la ligne de traction se déroule et d'adapter cette force de traction à une masse pesante fixée à l'extrémité libre de la ligne de traction pour obtenir une accélération subie par la masse pesante sensiblement indépendante de la valeur de la masse considérée.

Suivant les configurations techniquement possibles, l'absorbeur d'énergie comporte toute ou partie des caractéristiques suivantes.

Dans une forme de réalisation le frein de l'absorbeur d'énergie comporte un rotor couplé en rotation à l'arbre du tambour enrouleur et comporte un stator bloqué en rotation dans un boîtier, une force de friction entre le rotor et le stator déterminant la valeur du couple frein maximum.

Par exemple le rotor est monté sur l'arbre. Il est ainsi obtenu un couplage direct sans jeux et sans élément complexe ou fragile entre le tambour d'enrouleur et le rotor du frein.

Dans une forme de réalisation, des éléments de rotor et des éléments de stator sont montés alternés, mobiles suivant une direction d'un axe de rotation du rotor, pour constituer un frein à disques et sont maintenus en contacts avec une force d'appui déterminée pour obtenir le couple frein maximum désiré. Suivant cet agencement à multiples éléments de stator et de rotor, il est possible d'obtenir les couples frein maximum recherchés dans un volume relativement réduite et avec un diamètre également réduit du rotor.

Dans une forme de réalisation un élément ressort est monté en compression de sorte à exercer la force d'appui nécessaire à assurer la friction voulue entre les éléments de stator et de rotor.

Dans une forme de réalisation, l'élément ressort est monté en compression entre deux sous-ensembles du frein en appui sur des éléments de stator. La force exercée par l'élément ressort est ainsi répartie entre deux sous-ensembles en assurant une meilleure répartition de la force sur les différents éléments.

Par exemple l'organe de contrôle agit pour modifier une distance entre des extrémités du frein, définies par des faces extérieures du premier et du dernier éléments de stator et ou de rotor, et conséquemment une longueur de compression de l'élément ressort. L'élément ressort se trouve ainsi comprimé d'une longueur donnée ce qui définit précisément la force exercée par l'élément ressort pour appliquer les uns contre les autres les éléments de stator et de rotor.

Par exemple l'organe de contrôle comporte une poignée, accessible à l'extérieur du boîtier, entraînant en rotation une vis dont un filetage coopère avec un alésage taraudé dudit boîtier pour déplacer un élément d'appui en appui sur un premier élément de stator et modifier la distance d'une face extérieure dudit premier élément de stator à une face extérieure d'un dernier élément de rotor en appui sur un épaulement de l'arbre. La poignée permet d'agir avec la précision souhaitée sur la compression de l'élément ressort sans introduire dans celui-ci d'effort de torsion qui serait susceptible d'en modifier les caractéristiques.

La ligne de traction comporte par exemple un ou plusieurs câble, ou une ou plusieurs sangles enroulées sur le tambour enrouleur. Par exemple des câbles en acier ou des sangles en fibres de polymère qui peuvent être réalisés avec la résistance nécessaire et la souplesse souhaitée pour être parfaitement enroulés sur le tambour enrouleur.

Le tambour enrouleur peut être un cylindre de révolution. Cette solution s'avère avantageuse lorsque la ligne de traction comporte une sangle ou lorsque la ligne de traction comporte un ou plusieurs câbles pour obtenir en mode déclenché une force sensiblement constante pendant la rotation du tambour enrouleur.

Le tambour enrouleur peu également présenter une forme de révolution de rayon non constant, par exemple un tronc de cône, une loi de variation du rayon étant définie pour répondre à une loi de variation souhaitée de la force sur la ligne de traction correspondant à un couple frein maximum en fonction d'un nombre de tours de ladite ligne de traction autour dudit tambour enrouleur.

Dans une forme de réalisation, l'arbre est en outre immobilisé par rapport au boîtier de l'absorbeur d'énergie, directement ou par l'intermédiaire d'une autre structure fixe par rapport au boîtier, au moyen d'un fusible calibré dont le calibre est choisi pour déclencher le fusible lorsqu'une force au plus égale à une force minimale de déclenchement dudit absorbeur d'énergie est appliquée sur la ligne de traction.

Il est ainsi prévenu, sans perturber le fonctionnement du frein limitant le couple sur la ligne de traction, un glissement du frein qui pourrait, dans certaines circonstances comme en présence de vibrations importantes, se produire de manière plus ou moins perceptible pour des valeurs de force exercée sur la ligne de traction inférieure à la valeur définie pour le déclenchement de l'absorbeur d'énergie.

L'invention concerne également un siège anticrash comportant une structure porteuse sur laquelle est fixé un baquet. Le baquet, ou au moins une assise du baquet, recevant le poids d'un occupant du siège, est maintenu immobile sur la structure porteuse suivant au moins une direction par un absorbeur d'énergie conforme à l'invention. Pour cela, un boîtier de l'absorbeur d'énergie est fixé à la structure porteuse et le baquet est fixé à une extrémité libre de la ligne de traction, ou inversement le boîtier étant fixé au baquet et l'extrémité libre de la ligne de traction étant fixée à la structure porteuse.

Ainsi, lorsque le siège est soumis à une forte accélération, par exemple dans un cas de crash d'un aéronef, la force générée par la masse de l'occupant, et des parties du siège maintenues par la ligne de traction, sur la ligne de traction entraîne le déclenchement de l'absorbeur d'énergie qui écrête l'accélération subie par l'occupant du siège à une valeur déterminée, la valeur à laquelle l'accélération est écrêtée pouvant elle-même être fonction de la position de l'organe de contrôle qui aura été préalablement positionné pour prendre en compte la masse de l'occupant du siège de sorte que l'accélération subie soit sensiblement la même quelle que soit la masse de l'occupant du siège.

Dans une forme de réalisation, le baquet est fixé à la structure porteuse par des éléments de guidage d'un mouvement dudit baquet suivant une direction sensiblement verticale, dans une position d'utilisation du siège, l'absorbeur d'énergie étant fixé à la structure porteuse et au baquet pour freiner un mouvement suivant la direction sensiblement verticale en cas d'accélération verticale conduisant, en raison de la masse du baquet et d'un occupant du siège, à une force appliquée sur la ligne de traction générant sur l'arbre un couple dépassant le couple frein maximum.

Un tel siège s'avère particulièrement adapté à la protection d'un passager d'un aéronef pouvant être soumis à un crash avec une forte composante verticale d'accélération, par exemple dans le cas d'un crash d'aéronef à voilure tournante.

La description et les dessins d'un mode particulier de réalisation de l'invention, permettront de mieux comprendre les buts et avantages de l'invention. Il est clair que cette description est donnée à titre d'exemple, et n'a pas de caractère limitatif.

Dans les dessins :
- les figures 1a et 1b illustrent de manière schématique une vue de principe d'un absorbeur d'énergie suivant l'invention, l'absorbeur étant illustré dans une condition non déclenchée sur la figure 1a et dans une condition déclenchée sur la figure 1b ;
- les figures 2a et 2b illustrent de manière schématique une vue de principe de profil d'un siège comportant l'absorbeur d'énergie des figures 1a et 1b, respectivement en position non déclenchée, figure 2a, et en position déclenchée, figure 2b, de l'absorbeur d'énergie ;
- la figure 3 montre en vue perspective un exemple de réalisation d'un absorbeur d'énergie à sangle intégré dans un boîtier suivant l'invention ;
- la figure 4 représente en vue perspective l'absorbeur d'énergie de la figure 4 dont une face du boîtier n'est pas représentée pour montrer l'agencement des composants de l'absorbeur d'énergie ;
- la figure 5 représente une section suivant un plan axial de l'absorbeur d'énergie des figures 3 et 4 montrant l'agencement des composants de l'absorbeur d'énergie ;
- la figure 6 illustrent de manière schématique une vue de principe d'un absorbeur d'énergie suivant l'invention comportant un tambour enrouleur avec deux câbles mis en oeuvre comme ligne de traction ;
- la figure 7 illustrent de manière schématique une vue de principe d'un absorbeur d'énergie suivant l'invention comportant un tambour enrouleur non cylindrique.

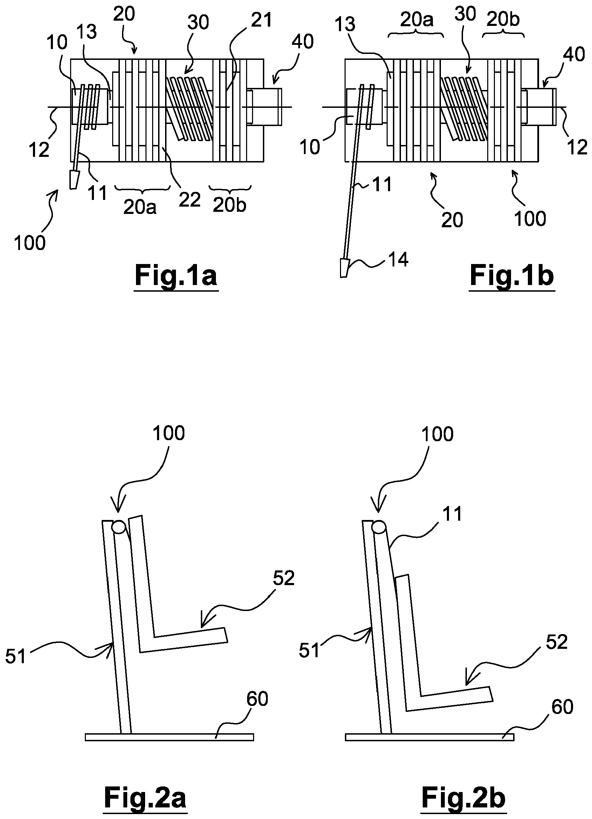

Les figures 1a et 1b montrent un schéma de principe d'un absorbeur d'énergie 100 suivant l'invention, ledit absorbeur étant sur la figure 1a dans une configuration avant déclenchement et dans la configuration après déclenchement.

"Avant déclenchement" signifie dans la présente description que l'absorbeur d'énergie n'a pas été soumis à des conditions ayant conduit ledit absorbeur d'énergie à absorber d'énergie et a contrario "après déclenchement" signifie que ledit absorbeur d'énergie a été soumis à des conditions dans lesquelles il a absorbé une énergie.

L'absorbeur d'énergie 100 comporte principalement :
- une ligne de traction 11 réalisée dans un matériau souple et résistant ;
- un tambour enrouleur 10 ;
- un frein 20 ;
- un élément ressort 30
- un organe de contrôle 40 de la force exercée par l'élément ressort 30.

L'absorbeur d'énergie comporte également un arbre 13 monté en rotation autour d'un axe 12 sur lequel sont fixés le tambour enrouleur 10 et un rotor 21 du frein de sorte que ledit tambour enrouleur et ledit rotor sont solidaires en rotation autour de l'axe 12.

Le rotor 21 du frein est couplé en friction avec un stator 22 immobilisé en rotation, une force générée par l'élément ressort 30 assurant le couplage en friction dudit rotor et dudit stator formant le frein 20.

L'organe de contrôle 40 agit sur l'élément ressort 30 pour modifier la force assurant le couplage en friction du rotor et du stator du frein.

La ligne de traction 11 est fixée à une première extrémité au tambour enrouleur 10 sur lequel ladite ligne de traction est enroulées lorsque le dispositif 100 n'est pas déclenché comme illustré sur le schéma figure 1a.

Suivant cette configuration du dispositif 100, une force de traction exercée sur la ligne de traction 11, par exemple à une seconde extrémité libre 14 de ladite ligne de traction, génère un couple moteur sur l'arbre 13, fonction de la force de traction et de la distance d'application de ladite force à l'axe 12 donc fonction du diamètre du tambour enrouleur 10.

Tant que le couple moteur sur l'arbre 13 est inférieur à un couple frein maximum créé par le frein 20, l'arbre 13 reste bloqué en rotation et la ligne de traction 11 est également bloquée.

Lorsque la force de traction sur la ligne de traction 11 est augmentée jusqu'à une valeur conduisant à un couple moteur dépassant le couple frein maximum, l'arbre 13 est entraîné en rotation alors que le couple frein maximum est maintenu par le frein 20 et que la ligne de traction 11 est déroulée du tambour 13 comme illustré sur le schéma de la figure 1b.

Il en résulte que la force à laquelle est soumise la ligne de traction 11 est écrêtée à la valeur correspondant au couple frein maximum tant que ladite ligne de traction n'est pas totalement déroulée du tambour enrouleur 10.

Lorsque la ligne de traction 11 est totalement déroulée du tambour enrouleur 10, la rotation de l'arbre 13 est arrêtée, la ligne de traction étant fixée audit tambour enrouleur à la première extrémité.

Il résulte de l'écrêtage de la force sur la ligne de traction 11 que lorsque cette force est le résultat d'une accélération Gamma sur une masse m donnée, ladite accélération Gamma est également écrêtée suivant la relation triviale "F = m Gamma".

Lorsqu'il est connu la masse, par exemple celle d'une partie mobile d'un siège et de son occupant qui ne doit pas subir une accélération supérieure à une valeur Gamma_max, il en est déduit la force Fmax qui doit être appliquée sur la ligne de traction et donc le couple frein maximum appliqué par le frein 20 au tambour enrouleur 10.

Une action sur l'organe de contrôle 40 agit sur la force développée par l'élément ressort 30 et sur le couplage en friction du rotor et du stator du frein 20 et permet alors d'ajuster le couple frein maximum à la valeur correspondant à la masse considérée et à l'accélération souhaitée Gamma_max devant déclencher le glissement entre le stator et le rotor.

Avantageusement, l'organe de contrôle 40 comporte une commande graduée, par exemple en masse.

Les figures 2a et 2b montrent de profil un siège 50, illustré très schématiquement, comportant un absorbeur d'énergie 100.

Le siège 50 comporte une structure porteuse 51 et un baquet 52 attaché à la structure porteuse.

Le baquet 52 est illustré de manière très simplifiée et représente la partie du siège qui avec l'occupant du siège est soumise à l'accélération, ici une accélération sensiblement verticale, qui doit être écrêtée. Suivant le type de siège le baquet peut par exemple être un baquet rigide dans lequel une assise et un dossier sont fixés rigidement ou comporter un dossier et une assise articulés entre eux.

Le baquet 52 est monté sur des glissières ou autre dispositif de guidage par exemple articulé, non représentés, de la structure porteuse 51, de sorte à être guidé dans un déplacement suivant une direction dans laquelle l'accélération est écrêtée.

Sur la figure 2a, le déplacement du baquet 52 dans la direction déterminée par le dispositif de guidage est bloqué par un absorbeur d'énergie 100 fixé sur la structure porteuse 51 et dont l'extrémité libre 14 de la ligne de traction est fixée audit baquet.

On comprend que dans l'exemple illustré l'accélération devant être écrêtée est une accélération sensiblement verticale (ou une composante sensiblement verticale de l'accélération subie par le siège) et orientée du bas vers le haut en réaction à un crash comportant une forte composante verticale.

Dans cette configuration de la figure 2a, le frein s'oppose au déroulement de la ligne de traction tant qu'aucune force capable de générer un couple moteur supérieur au couple frein maximum n'est atteinte, c'est à dire que l'accélération subie par la masse du baquet et de l'occupant du siège réunis n'a pas conduit à générer la force nécessaire, ici prise pour sa composante suivant la ligne de traction 11.

Lorsque l'accélération, par exemple en cas de crash, produit sur la ligne de traction 11 une force générant un couple moteur supérieur au couple frein maximum de l'absorbeur d'énergie 100, il apparaît un glissement entre le stator 22 et le rotor 21 du frein qui limite le couple moteur à la valeur du couple frein maximum, ce qui a pour conséquence de limiter, pendant toute la durée du glissement, la force sur la ligne de traction 11 et donc l'accélération subie par l'occupant du siège.

Le glissement entre le stator 22 et le rotor 21 cesse dès lors qu'il résulte que le couple moteur redevient inférieur au couple frein maximum ou que la ligne de traction 11 est totalement déroulée du tambour enrouleur 10.

En pratique, la longueur de ligne de traction 11 enroulée sur le tambour enrouleur 10 détermine la distance sur laquelle l'accélération subie est écrêtée et, si le couple frein maximum est ajusté à une valeur fonction de la masse retenue par la ligne de traction pour obtenir une accélération donnée fixe, détermine une durée sensiblement indépendante de la masse pendant laquelle l'accélération sera écrêtée à la valeur choisie.

Cette durée qui est déterminée par les caractéristiques de l'absorbeur d'énergie 100 et qui peut être sensiblement constante quel que soit la masse, dans des limites opérationnelles acceptables, d'un occupant du siège correspond avantageusement au moins à la durée du pic d'accélération tel que prévue en cas de crash dans les normes, par exemple dans les normes aéronautiques des JAA et FAA, pour sa partie dépassant par exemple une accélération de 60m/s2 (facteur d'accélération de 6g environ). Dans le cas des conditions de crash d'un aéronef, une longueur de déplacement du baquet comprise entre 100mm et 200mm est généralement suffisante pour écrêter le pic d'accélération.

D'autres agencements de l'absorbeur d'énergie 100 sur le siège 50 sont possibles et qui permettent d'obtenir un résultat similaire.

Par exemple l'absorbeur d'énergie 100 peut être fixé au baquet 52 et l'extrémité libre 14 de la ligne de traction fixée à la structure porteuse 51.

Des configurations avec un renvoi de la ligne de traction, par exemple par des poulies, sont également possibles pour autant que la ligne de traction entre le baquet 52 et la structure porteuse 51 ait une orientation voisine de la direction de l'accélération devant être écrêtée. En pratique il sera cependant évité les solutions qui introduiraient des jeux ou un allongement excessif de la ligne de traction, en raison de risques d'allongement élastique de ladite ligne de traction, et les solutions qui conduiraient à un alourdissement excessif de la partie du siège devant être soumise à la traction de la ligne de traction et devant être freinée.

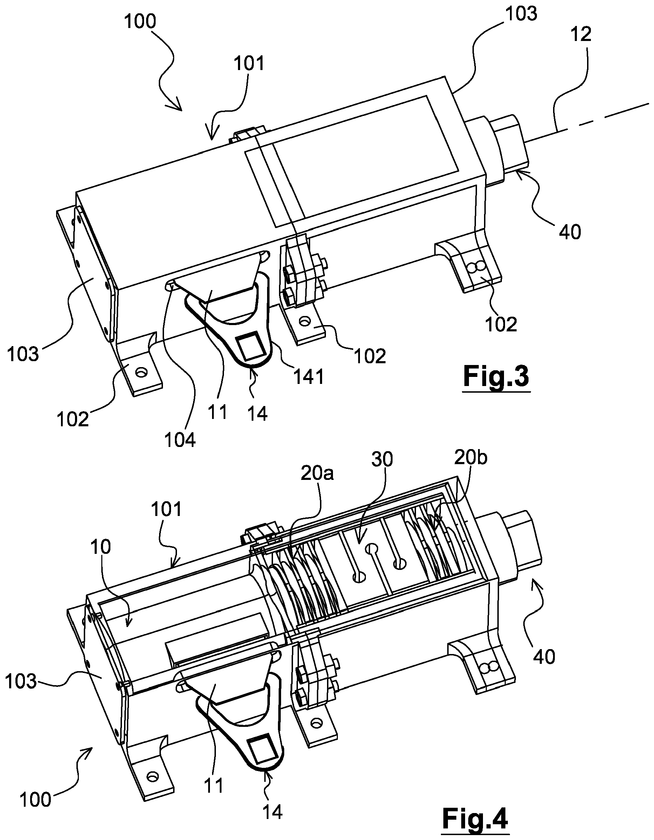

Les figures 3, 4 et 5 montrent un exemple de réalisation d'un absorbeur d'énergie 100 conforme à l'invention.

Sur la figure 3 l'absorbeur d'énergie 100 est illustré dans une configuration prête à fonctionner, c'est-à-dire avant déclenchement.

L'absorbeur d'énergie se présente sous la forme générale d'un boîtier 101 parallélépipède rectangle avec deux faces d'extrémité 103 sensiblement carrées et allongé suivant la dimension perpendiculaire aux faces d'extrémité.

L'axe 12 est parallèle aux arrêtes des faces allongées et passe sensiblement par des centres des faces d'extrémité 103.

Le boîtier 101 comporte également des pattes de fixation 102, en nombre et en disposition sur ledit boîtier nécessaire pour fixer ledit boîtier sur une structure porteuse ou sur le baquet d'un siège.

Au moins un organe de contrôle 40 est accessible depuis l'extérieur du boîtier 101. Dans l'exemple illustré l'organe de contrôle est terminé par une poignée 41, pouvant être entraînée en rotation à la main ou à l'aide d'un outil tel qu'une clé, située sur une des faces d'extrémité 103.

La ligne traction 11 est réalisée avec une sangle dont l'extrémité libre 14 comporte une boucle d'attache 141, par exemple une boucle métallique.

La ligne de traction 11 sort du boîtier 101 par une ouverture 104 de forme relativement étroite et allongée pour laisser un passage libre à la sangle de la ligne de traction 11 et éviter/limiter le risque de pénétration de corps étrangers.

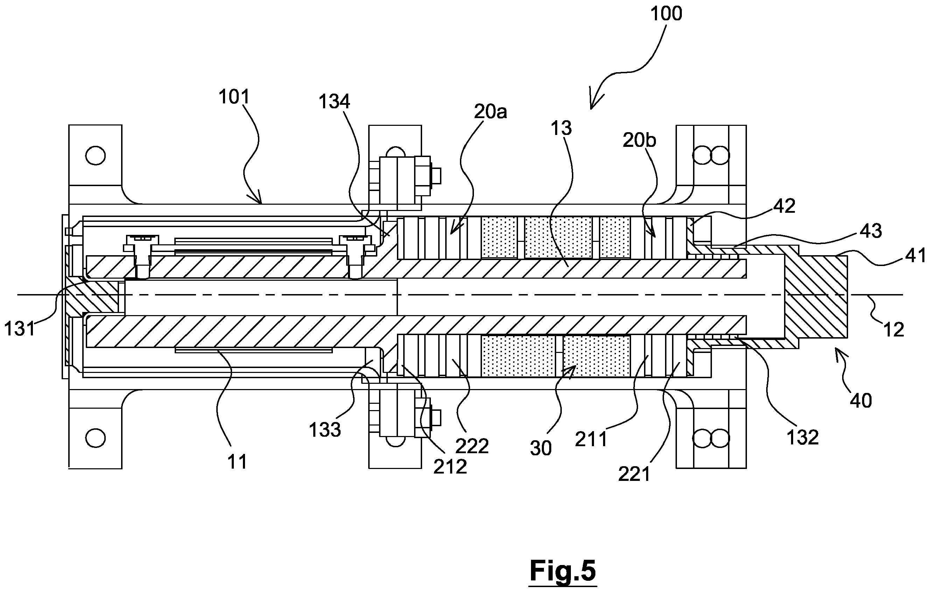

La figure 4 représente l'absorbeur d'énergie 100 de la figure 3 dont une face n'est pas représentée et la figure 5 représente l'absorbeur d'énergie en coupe axiale de sorte à montrer les composants intérieurs dudit absorbeur d'énergie et la manière dont ils coopèrent.

Du côté d'une première extrémité du boîtier 101, à gauche sur les figures 3, 4 et 5, se trouve le tambour enrouleur 10 sur lequel est enroulé la sangle de la ligne de traction 11.

Du côté d'une seconde extrémité du boîtier 101, à droite sur les figures 3, 4 et 5, se trouvent le frein 20 et l'élément ressort 30. Dans cet exemple de réalisation, le stator 22 et le rotor 21 du frein 20 comporte deux sous-ensembles 20a et 20b entre lesquelles sous-ensembles se trouve l'élément ressort 30.

Le stator 22 de frein comporte un ensemble d'éléments de friction 222 bloqués en rotation par le boîtier 101, et indépendant de l'arbre 13 d'axe 12. Les éléments de friction 222 du stator sont libres en translation, sur une distance suffisante pour garantir le fonctionnement du frein, de sorte à pouvoir se déplacer suivant la direction de l'axe 12 par rapport au boîtier et par rapport à l'arbre 13.

Le blocage en rotation dans le boîtier des éléments de friction 222 est par exemple obtenu par une forme des dits éléments de friction ajustée à la forme intérieure du boîtier, par exemple carré, qui maintien les éléments de stator immobiles en rotation autour de l'axe 12 tout en autorisant un glissement longitudinal dans un tube de section carrée formé par le boîtier.

Le rotor 21 de frein comporte un ensemble d'éléments de friction 211 montés entraînés en rotation avec l'arbre 13. Les éléments de friction 211 du stator sont libres en translation sur l'arbre 13 de sorte à pouvoir se déplacer suivant la direction de l'axe 12 par rapport au boîtier et par rapport à l'arbre 13. Un tel résultat est par exemple obtenu avec un arbre cannelé et une forme d'un trou central des éléments de friction du rotor comportant des dents complémentaires des cannelures de l'arbre.

Les éléments de friction 221 du rotor sont par exemple des disques dont un diamètre extérieur est choisi pour que les dits disques puissent tourner sans interférence avec les parois intérieure du boîtier.

Les éléments de friction 211 du stator et les éléments de friction 222 du stator sont montés alternés sur l'arbre 13 et forment ainsi un frein à disques, le nombre de disques permettant d'obtenir des capacités du frein à créer un couple frein maximum souhaité sans augmenter de manière excessive la dimension des disques et ou la force nécessaire pour créer entre le stator et le rotor la friction nécessaire.

De manière connue les surfaces en contact entre les éléments de rotor et de stator sont relativement lisses, ou au moins adaptées pour permettre un glissement entre les éléments en contact.

Les matériaux permettant d'obtenir un glissement avec friction sont connus et dans le cas de l'absorbeur d'énergie 100, il sera préféré des matériaux dont la force de friction statique, sans rotation du rotor, est égale ou proche de la force de friction dynamique lorsque le rotor est en rotation.

Il doit également être noté que le frein 20 est destiné à rester statique sur de longue période et à fonctionner sur un nombre limité de tours et un nombre limité de fois, pour l'essentiel lors de tests de bon fonctionnement.

Les matériaux des éléments du stator et du rotor seront donc choisis pour éviter des risques de collage alors que leurs capacités à résister à une usure en utilisation ne sont pas critiques dans le cas de l'absorbeur d'énergie 100.

L'élément ressort 30 est placé entre les deux sous-ensembles 20a, 20b du frein 20 de sorte à être comprimé entre lesdits deux sous-ensembles de frein pour obtenir une force d'application de faces en contact des éléments de stator et de rotor.

L'élément ressort 30 consiste dans l'exemple illustré en un bloc d'un matériau rigide avec des propriétés élastiques usiné pour permettre une déformation élastique suivant la direction de l'axe 12.

La forme de l'élément ressort en assure l'immobilisation en rotation dans le boîtier 101 sans en interdire le déplacement suivant la direction de l'axe. Ce choix qui n'est pas obligatoire permet cependant de limiter la masse tournante dans l'absorbeur d'énergie et donc les effets transitoires sur la vitesse de rotation lors d'un déclenchement de l'absorbeur d'énergie.

Dans ce cas il est préféré que l'élément ressort 30 prenne appui, comme illustré, sur des éléments de stator pour éviter une friction sur ledit élément ressort dont le matériau n'est pas choisi pour ses propriétés de friction. Toutefois il est possible de déposer sur des faces de l'élément ressort un matériau de friction si ledit élément ressort est en contact avec un ou des éléments de rotor.

Il doit également être pris en considération que l'élément ressort 30 reste comprimé en permanence, dans l'attente d'un éventuel déclenchement de l'absorbeur d'énergie 100, et qu'il doit donc conserver son élasticité dans ces conditions de sorte à maintenir, sous un écrasement donné et maintenu, une force de pression entre les éléments de stator et de rotor sensiblement constante tout au long d'une durée de vie opérationnelle de l'absorbeur d'énergie.

L'élément ressort peut être réalisé dans un acier ou dans un matériau polymère chargé ou non de fibres.

L'organe de contrôle 40 comporte un élément d'appui 42 dont la position suivant la direction de l'axe 12 est ajustable. La position de l'élément d'appui 42 est par exemple ajustée par un filetage 43 d'une vis de l'organe de contrôle 40 qui coopère avec un trou taraudé du boîtier 101, la vis étant pourvue à une extrémité extérieure au dit boîtier d'une poignée 41, par exemple un bouton moleté, et ou d'une forme adaptée pour être entraînée en rotation à visser ou à dévisser par un outil.

Le cas échéant, l'organe de contrôle comporte des moyens de blocage en rotation, non représentés, pour éviter un serrage ou un desserrage non commandé de la vis par exemple sous l'effet de vibrations.

L'élément d'appui 42 est situé du côté d'une face extérieure d'un premier élément 221 de stator contre lequel il exerce la force d'appui pour obtenir une compression voulue de l'élément ressort. En étant ainsi en appui contre un élément non tournant du frein 20, il est évité d'introduire des forces pouvant provoquer un serrage ou un desserrage de l'organe de contrôle 40 lors d'un déclenchement de l'absorbeur d'énergie.

L'arbre 13 comporte également un épaulement 134 situé du côté d'une face extérieure d'un dernier élément 212 de rotor situé à une extrémité opposée du frein 20 par rapport au premier élément 221 de stator. Il doit être noté que le dernier élément 212 de rotor est entraîné en rotation avec l'arbre 13 et qu'il est donc avantageusement immobile en rotation par rapport à l'épaulement 134.

Suivant cet agencement, l'ensemble des éléments de stator et de rotor ainsi que l'élément ressort 30 sont disposés sur l'arbre 13 entre l'épaulement 134 et l'élément d'appui 42.

Lorsque l'élément d'appui 43 est suffisamment rapproché de l'épaulement 134, les surfaces en vis à vis des éléments de rotor et de stator sont en contact et soumises à une pression établie par la force avec laquelle l'élément ressort 30 est comprimé.

Il en résulte un couple frein maximum qui interdit la rotation du rotor 21 et donc de l'arbre 13 tant qu'aucun couple moteur supérieur au couple frein maximum n'est appliqué audit arbre par une traction sur la sangle de la ligne de traction, couple frein maximum qui peut être modifié par une action sur la poignée 41 à visser pour augmenter le couple frein maximum ou à dévisser pour diminuer le couple frein maximum.

Un tel réglage est rendu accessible par la poignée 41 lorsque l'absorbeur d'énergie 100 est fixé sur une structure d'un siège 50 de sorte que le couple frein maximum peut être modifié en fonction de la masse de l'occupant du siège.

La poignée 41 comporte par exemple un indicateur de position gradué en masse de sorte à obtenir un déclenchement de l'absorbeur d'énergie 100 pour une accélération sensiblement constante avec les différentes masses des occupants possibles du siège.

Pour assurer un fonctionnement optimal de l'absorbeur d'énergie, l'arbre 13 est maintenu centré sur l'axe 12 par des paliers d'extrémités 131, 132 ou intermédiaire 133 de sorte à limiter au mieux les frottements parasites et les désaxements qui perturberaient le couple frein contrôlé par le frein 20.

Le mode de réalisation détaillé décrit n'est qu'un exemple non limitatif d'une forme de réalisation.

Par exemple la ligne de traction peut être une ou plusieurs sangles, comme dans l'exemple détaillé, un ou plusieurs câbles ou une chaîne, le tambour enrouleur étant alors adapté au type de ligne de traction mis en oeuvre.

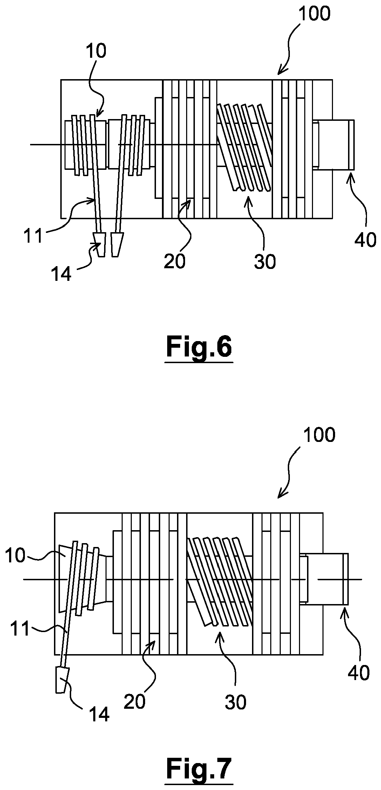

Suivant le schéma de principe de la figure 6, la ligne de traction 11 peut consister en une pluralité de câbles enroulés sur le tambour enrouleur 10. Une telle configuration ne modifie pas la valeur du couple frein mais assure une redondance dans la structure de l'absorbeur d'énergie en cas en particulier de rupture d'un câble.

Suivant une autre variante présentée sur le schéma de principe de la figure 7, le tambour enrouleur 10 n'est pas un tambour cylindrique mais présente un profil duquel il résulte que le diamètre dudit tambour enrouleur varie suivant la position considérée sur l'axe 12.

Lorsque l'absorbeur d'énergie est déclenché, la force de traction correspondant au couple frein maximum est alors différente suivant la position du câble sur le tambour enrouleur, plus faible lorsque le diamètre local du tambour est plus grand et plus forte lorsque le diamètre local du tambour est plus petit.

Il est ainsi possible d'obtenir en mode déclenché de l'absorbeur d'énergie un profil variable de l'accélération subie par l'occupant du siège.

Un tel profil variable permet par exemple de diminuer la force sur la ligne de traction nécessaire pour initier la rotation du frein, le couple frein maximum pouvant être au début du mouvement plus important du fait même de la conception du frein ou du fait d'un collage lié à une durée importante passée sans rotation, et pour reprendre ensuite une accélération d'écrêtage souhaitée.

Une forme conique du tambour enrouleur comme représenté sur la figure 7 permet d'augment progressivement l'accélération subie par l'occupant du siège et de limiter les effets perçus d'un arrêt brutal du baquet dans le cas ou la durée de l'accélération liée au crash conduirait à un déroulement total du câble.

Il doit être noté qu'un effet similaire est obtenu lorsque la ligne de traction est réalisée avec une sangle d'épaisseur non négligeable, le rayon apparent du tambour étant fonction du nombre de tours encore enroulés sur ledit tambour et diminuant progressivement lorsque la sangle se déroule.

D'autres formes de frein, non illustrées, sont également possibles comme par exemple des rotors en forme de tambour sur une surface enveloppe cylindrique duquel des patins sont appliqués avec plus ou moins de force et ou en plus ou moins grand nombre pour obtenir le couple frein souhaité.

Dans une forme de réalisation, non illustrées, l'arbre entraîné en rotation par le tambour est immobilisé par rapport à un boîtier de l'absorbeur d'énergie au moyen d'un fusible calibré, par exemple une goupille montée en cisaillement.

Le calibre de ladite goupille est choisi de sorte que celle-ci soit cisaillée lorsqu'il est appliqué au tambour le couple correspondant à la force sur la ligne de traction devant déclencher le fonctionnement de l'absorbeur d'énergie.

Ainsi il est évité un possible glissement du frein, par exemple du fait d'un environnement vibratoire intense, sans que la force de déclenchement, ou au moins du déclenchement du fusible, ne soit atteinte ou dépassée.

Lorsque la force écrêtée et le couple frein correspondant sont fonction du réglage appliqué à l'absorbeur d'énergie, il sera choisi un calibre du fusible prenant en compte la plus petite force devant déclencher le fonctionnement de l'absorbeur d'énergie.

Dans ce mode de réalisation, il sera également de préférence pris la précaution de retirer le fusible pour réaliser les essais du frein sauf à remplacer ledit fusible après l'essai.

Il doit également être compris que le tambour enrouleur est couplé mécaniquement au frein de sorte à subir le couple frein mais que le frein n'est pas nécessairement monté sur le même axe de rotation que le tambour enrouleur, des transmissions mécaniques présentant par exemple des renvois d'angle ou d'autres dispositifs de couplage étant possible

Dans une forme de réalisation, le réglage du frein en fonction du poids est assuré de manière automatique, par exemple par un système de mesure du poids de l'occupant du siège en condition statique et un dispositif tel qu'un actionneur électrique agissant sur l'organe de contrôle en fonction dudit poids mesuré.

Il est ainsi obtenu un absorbeur d'énergie pour siège et un siège pouvant être soumis à des accélérations de crash qui permettent de limiter l'accélération subie par un occupant du siège en prenant en compte la masse dudit occupant.

En outre le fonctionnement du système n'est pas destructeur ce qui permet de tester le fonctionnement correct de l'absorbeur d'énergie, par exemple avant sa mise en service ou de manière périodique, et de remettre celui en condition de fonctionner à nouveau.

## Revendications

1. Absorbeur d'énergie (100) pour écrêter une force d'accélération subie par un corps pesant comportant un tambour enrouleur (10) monté en rotation autour d'un arbre (13) autour duquel est enroulée, dans une configuration non déclenchée de l'absorbeur d'énergie, une ligne de traction (11), dans lequel ledit arbre est couplé mécaniquement à un rotor (21) d'un frein (20) à disques dont un stator (22) est immobilisé en rotation par rapport à un boîtier (101) **caractérisé en ce qu'**un élément ressort (30) est monté en compression entre deux sous-ensembles (20a, 20b) du frein (20), chaque sous-ensemble comportant des éléments de rotor et de stator montés alternés et mobiles suivant une direction d'un axe de rotation du rotor (21), de sorte à exercer une force d'appui qui s'applique entre les éléments de rotor et les éléments de stator en contact, afin d'immobiliser en rotation l'arbre (13) lorsqu'un couple appliqué à l'arbre par la ligne de traction (11) soumise à une force de traction est inférieur à un couple frein maximum du frein et qui lorsque l'arbre est en rotation, dans une configuration déclenchée de l'absorbeur d'énergie, génère un couple sensiblement constant et égal au couple frein maximum.

2. Absorbeur d'énergie suivant la revendication 1 comportant un organe de contrôle (40) agissant sur le frein (20) pour modifier une valeur du couple frein maximum.

3. Absorbeur d'énergie suivant l'une des revendications dans lequel le rotor (21) est monté sur l'arbre (13).

4. Absorbeur d'énergie suivant l'une des revendications précédentes dans lequel l'élément ressort (30) est monté en compression entre les deux sous-ensembles (20a, 20b) du frein (20) en appui sur des éléments de stator (222).

5. Absorbeur d'énergie suivant l'une des revendications précédentes dans lequel un organe de contrôle (40), agissant sur le frein (20) pour modifier une valeur du couple frein maximum, agit pour modifier une distance entre des extrémités du frein (20), définies par des faces extérieures du premier et du dernier élément de stator et ou de rotor, et conséquemment une longueur de compression de l'élément ressort (30).

6. Absorbeur d'énergie suivant la revendication 5 dans lequel l'organe de contrôle (40) comporte une poignée (41), accessible à l'extérieur du boîtier (101), entraînant en rotation une vis dont un filetage (43) coopère avec un alésage taraudé dudit boîtier pour déplacer un élément d'appui (42) en appui sur un premier élément de stator (221) et modifier la distance d'une face extérieure dudit premier élément de stator à une face extérieure d'un dernier élément de rotor (212) en appui sur un épaulement (134) de l'arbre (13).

7. Absorbeur d'énergie suivant l'une des revendications précédentes dans lequel la ligne de traction comporte un ou plusieurs câbles ou une ou plusieurs sangles enroulés sur le tambour enrouleur (10).

8. Absorbeur d'énergie suivant l'une des revendications précédentes dans lequel le tambour enrouleur (10) est un cylindre de révolution.

9. Absorbeur d'énergie suivant l'une des revendications 1 à 7 dans lequel le tambour enrouleur (10) a une forme de révolution de rayon non constant, par exemple un tronc de cône, une loi de variation du rayon étant définie pour répondre à une loi de variation souhaitée de la force sur la ligne de traction (11) correspondant à un couple frein maximum en fonction d'un nombre de tours de ladite ligne de traction autour dudit tambour enrouleur.

10. Absorbeur d'énergie suivant l'une des revendications précédentes dans lequel l'arbre (13) est en outre immobilisé par rapport à un boîtier dudit absorbeur d'énergie au moyen d'un fusible calibré dont le calibre est choisi pour déclencher ledit fusible lorsqu'une force au plus égale à une force minimale de déclenchement dudit absorbeur d'énergie est appliquée sur la ligne de traction (11).

11. Siège anticrash (50) comportant une structure porteuse (51) sur laquelle est fixée un baquet (52) **caractérisé en ce que** ledit baquet, ou au moins une assise dudit baquet, est maintenu immobile sur ladite structure porteuse suivant au moins une direction par un absorbeur d'énergie (100) conforme à l'une des revendications précédentes, un boîtier (101) dudit absorbeur d'énergie étant fixé à la structure porteuse (51) et le baquet (52) étant fixé à une extrémité libre (14) de la ligne de traction (11), ou inversement le boîtier (101) étant fixé au baquet (52) et l'extrémité libre (14) de la ligne de traction (11) étant fixée à la structure porteuse (51).

12. Siège anticrash suivant la revendication 11 dans lequel le baquet (52) est fixé à la structure porteuse (51) par des éléments de guidage d'un mouvement dudit baquet suivant une direction sensiblement verticale, dans une position d'utilisation du siège, l'absorbeur d'énergie (100) étant fixé à ladite structure porteuse et audit baquet pour freiner un mouvement suivant la direction sensiblement verticale en cas d'accélération verticale conduisant, en raison de la masse du baquet (52) et d'un occupant du siège, à une force appliquée sur la ligne de traction (11) générant sur l'arbre (13) un couple dépassant le couple frein maximum.

## Patentansprüche

1. Energieaufnehmer (100) zum Abschneiden einer von einem schweren Körper erlittenen Beschleunigungskraft, aufweisend eine Wickeltrommel (10), die um eine Welle (13) rotierend angebracht ist, um welche in einer nicht ausgelösten Konfiguration des Energieaufnehmers eine Zugleine (11) gewickelt ist, wobei die Welle mechanisch mit einem Rotor (21) einer Scheibenbremse (20) gekoppelt ist, von der ein Stator (22) in Bezug auf ein Gehäuse (101) in Rotation blockiert ist, **dadurch gekennzeichnet, dass** ein Federelement (30) zwischen zwei Unterbaugruppen (20a, 20b) der Bremse (20) komprimiert angebracht ist, wobei jede Unterbaugruppe Rotor- und Statorelemente aufweist, die gemäß einer Richtung einer Rotationsachse des Rotors (21) derart abwechselnd und beweglich angebracht sind, dass eine Stützkraft ausgeübt wird, die zwischen den kontaktierenden Rotorelementen und Statorelementen wirkt, um die Rotation der Welle (13) zu blockieren, wenn ein Moment, das von der Zugleine (11), die einer Zugkraft unterliegt, auf die Welle ausgeübt wird, kleiner als ein maximales Bremsmoment der Bremse ist und die, wenn die Welle in einer ausgelösten Konfiguration des Energieaufnehmers rotiert, ein Moment erzeugt, das etwa konstant und gleich dem maximalen Bremsmoment ist.

2. Energieaufnehmer nach Anspruch 1, aufweisend ein auf die Bremse (20) wirkendes Steuerorgan (40), um einen Wert des maximalen Bremsmoments zu ändern.

3. Energieaufnehmer nach einem der Ansprüche, wobei der Rotor (21) auf der Welle (13) angebracht ist.

4. Energieaufnehmer nach einem der vorangehenden Ansprüche, wobei das Federelement (30) zwischen den zwei Unterbaugruppen (20a, 20b) der Bremse (20) auf den Statorelementen (222) abgestützt komprimiert angebracht ist.

5. Energieaufnehmer nach einem der vorangehenden Ansprüche, wobei ein Steuerorgan (40), das auf die Bremse (20) wirkt, um einen Wert des maximalen Bremsmoments zu ändern, wirkt, um einen Abstand zwischen Enden der Bremse (20), die von den Außenflächen des ersten und des letzten Stator- und/oder Rotorelements definiert sind, und folglich eine Kompressionslänge des Federelements (30) zu ändern.

6. Energieaufnehmer nach Anspruch 5, wobei das Steuerorgan (40) einen Griff (41) aufweist, der außerhalb des Gehäuses (101) erreichbar ist, der eine Schraube rotierend antreibt, von der ein Gewinde (43) mit einer Gewindebohrung des Gehäuses zusammenwirkt, um ein Stützelement (42) in Abstützung auf einem ersten Statorelement (221) zu verlagern und den Abstand einer Außenfläche des Statorelements zu einer Außenfläche eines letzten Rotorelements (212) in Abstützung auf einem Absatz (134) der Welle (13) zu ändern.

7. Energieaufnehmer nach einem der vorangehenden Ansprüche, wobei die Zugleine ein oder mehrere Kabel oder einen oder mehrere Gurte aufweist, die um die Wickeltrommel (10) gewickelt sind.

8. Energieaufnehmer nach einem der vorangehenden Ansprüche, wobei die Wickeltrommel (10) ein Drehzylinder ist.

9. Energieaufnehmer nach einem der Ansprüche 1 bis 7, wobei die Wickeltrommel (10) eine Drehform mit einem nicht konstanten Radius, beispielsweise kegelstumpfförmig, hat, wobei ein Variationsgesetz des Radius definiert ist, um einem gewünschten Variationsgesetz der Kraft auf der Zugleine (11) zu entsprechen, die einem maximalen Bremsmoment in Abhängigkeit von einer Anzahl von Umdrehungen der Zugleine um die Wickeltrommel entspricht.

10. Energieaufnehmer nach einem der vorangehenden Ansprüche, wobei die Welle (13) ferner in Bezug auf ein Gehäuse des Energieaufnehmers mittels einer kalibrierten Sicherung blockiert ist, deren Kaliber ausgewählt ist, um die Sicherung auszulösen, wenn eine Kraft, die höchstens gleich einer minimalen Auslösekraft des Energieaufnehmers ist, auf die Zugleine (11) angewendet wird.

11. Anti-Absturz-Sitz (50), aufweisend eine tragende Struktur (51), auf der eine Wanne (52) befestigt ist, **dadurch gekennzeichnet, dass** die Wanne oder mindestens ein Sitz der Wanne auf der tragenden Struktur gemäß mindestens einer Richtung von einem Energieaufnehmer (100) nach einem der vorangehenden Ansprüche blockiert gehalten wird, wobei ein Gehäuse (101) des Energieaufnehmers an der tragenden Struktur (51) befestigt ist und die Wanne (52) an einem freien Ende (14) der Zugleine (11) befestigt ist oder umgekehrt, das Gehäuse (101) an der Wanne (52) befestigt ist und das freie Ende (14) der Zugleine (11) an der tragenden Struktur (51) befestigt ist.

12. Anti-Absturz-Sitz nach Anspruch 11, wobei die Wanne (52) durch Führungselemente einer Bewegung der Wanne gemäß einer etwa vertikalen Richtung in einer Benutzungsstellung des Sitzes an der tragenden Struktur (51) befestigt ist, wobei der Energieaufnehmer (100) an der tragenden Struktur und an der Wanne befestigt ist, um bei vertikaler Beschleunigung, die aufgrund der Masse der Wanne (52) und eines Benutzers des Sitzes zu einer auf die Zugleine (11) ausgeübten Kraft führt, die auf die Welle (13) ein Moment erzeugt, welches das maximale Bremsmoment überschreitet, eine Bewegung gemäß der etwa vertikalen Richtung zu bremsen.

## Claims

1. An energy absorber (100) for limiting the peak of an acceleration force to which a heavy body is subjected, the energy absorber comprising a winding drum (10) mounted to rotate about a shaft (13) and around which a traction line (11) is wound, when the energy absorber is in a non-triggered configuration, in which energy absorber said shaft is coupled mechanically to a rotor (21) of a disk brake (20), a stator (22) of which is prevented from moving in rotation relative to a casing (101), said energy absorber being **characterized in that** a spring element (30) is compressively mounted between two subassemblies (20a, 20b) of the brake (20), each subassembly comprising rotor and stator elements that are mounted in alternation and that are mounted to move along an axis of rotation of the rotor (21), in such a manner as to exert a bearing force that is applied between the rotor elements and the stator elements in mutual contact, so as to prevent the shaft (13) from moving in rotation when torque applied to the shaft by the traction line (11) as subjected to a traction force is less than a maximum braking torque of the brake, and that, when the shaft is rotating, when the energy absorber is in a triggered configuration, generates torque that is substantially constant and equal to the maximum braking torque.

2. An energy absorber according to claim 1, comprising a control member (40) acting on the brake (20) to modify a maximum braking torque value.

3. An energy absorber according to claim 1 or claim 2, wherein the rotor (21) is mounted on the shaft (13).

4. An energy absorber according to any preceding claims, wherein the spring element (30) is compressively mounted between the two subassemblies (20a, 20b) of the brake (20) bearing against stator elements (222).

5. An energy absorber according to any preceding claims, wherein a control member (40), acting on the brake (20) to modify a value of the maximum braking torque, acts to modify a distance between the ends of the brake (20), which ends are defined by outer faces of the first and last stator and/or rotor elements, and consequently a compression length of the spring element (30).

6. An energy absorber according to claim 5, wherein the control member (40) includes a handle (41), accessible from outside the casing (101), and driving a screw in rotation, a thread (43) of said screw co-operating with a tapped bore in said casing to move a bearing element (42) that bears against a first stator element (221) and to modify the distance from an outer face of said first stator element to an outer face of a last rotor element (212) bearing against a shoulder (134) of the shaft (13).

7. An energy absorber according to any preceding claims, wherein the traction line comprises one or more cables or one or more straps that are wound around the winding drum (10).

8. An energy absorber according to any preceding claims, wherein the winding drum (10) is a right circular cylinder.

9. An energy absorber according to any one of claims 1 to 7, wherein the winding drum (10) is of circularly symmetrical shape of non-constant radius, e.g. it is frustoconical, a law of variation for the variation in the radius being defined to respond to a desired law of variation for the variation in the force on the traction line (11) corresponding to a maximum braking torque as a function of a number of turns of said traction line around said winding drum.

10. An energy absorber according to any preceding claims, wherein the shaft (13) is also prevented from moving relative to a casing of said energy absorber by means of a calibrated fuse or shear pin, the calibration of which is chosen so that said fuse or shear pin is triggered when a force at most equal to a minimum trigger force for triggering said energy absorber is applied to the traction line (11).

11. An anti-crash seat (50) comprising a carrying structure (51) to which a bucket seat (52) is fastened, said anti-crash seat being **characterized in that** said bucket seat, or at least a seat pan of said bucket seat, is prevented from moving on said carrying structure in at least one direction by an energy absorber (100) according to any preceding claims, a casing (101) of said energy absorber being fastened to the carrying structure (51) and the bucket seat (52) being fastened to a free end (14) of the traction line (11), or conversely the casing (101) being fastened to the bucket seat (52) and the free end (14) of the traction line (11) being fastened to the carrying structure (51).

12. An anti-crash seat according to claim 11, wherein the bucket seat (52) is fastened to the carrying structure (51) by guide elements for guiding movement of said bucket seat in a substantially vertical direction, when the seat is in a position of use, the energy absorber (100) being fastened to the carrying structure and to said bucket seat so as to brake movement in the substantially vertical direction in the event of vertical acceleration that, due to the mass of the bucket (52) and to the mass of an occupant of the seat, leads to a force being applied to the traction line (11) that, on the shaft (13), generates torque that exceeds the maximum braking torque.
